# EUROPEAN PATENT APPLICATION

(11) **EP 2 919 550 A1**
(43) Date of publication of application: **16.09.2015**
(21) Application number: 14305367.6
(22) Date of filing: 13.03.2014
(51) Int. Cl.: H04W 76/02, H04W 84/20

(54) **Selection of access point among directly connected terminals**

(71) Applicant: NEC Corporation, Minato-ku, Tokyo 108-8001 (JP)
(72) Inventor: Zappulla, Fabrice, 95600 Eaubonne (FR)
(74) Representative: Cabinet Plasseraud

(57) **Abstract**

The invention concerns a method for connecting at least two terminals (TER1, TER2, TER3) through a wireless local area network. The connection to the wireless local area network requires the definition of an access point (AP) for providing access to the wireless local area network. The method comprises the steps performed by at least one terminal:
- determining a value of at least one parameter,
- transmitting the parameter value through an auxiliary wireless link (BT1),
- upon reception of a parameter value of at least one second terminal, comparing the parameter values according to a predetermined criterion,
- on the basis on the comparison, selecting one terminal (TER1) as the access point (AP) to the wireless local area network.

## Description

The present invention relates to the connection of a terminal to at least one other terminal and through a wireless local area network, for example according to IEEE-802.1x standard (such as a Wi-Fi connection for example).

Each terminal can be a user equipment such as a mobile phone for example, or a Smartphone, a tablet, a laptop, a communicating computer, etc.

That kind of connection through the wireless local area network between at least two terminals requires the definition of an access point among these terminals, before establishing the local network (e.g. in a pear-to-pear mode). In such a case, a handshake between the terminals is usually necessary to define the access point.

More precisely, the terminals users can choose a "Wi-Fi -Direct" connection with a known identifier (ID) but the time needed to establish the network is long, and more particularly the determination of an access point is needed. As another option, the terminals may use a conventional Wi-Fi ad-hoc mode, where:
- one terminal opens an access point with an ID and password but that terminal cannot see others terminals and can wait for incoming connections, and
- the other terminals still have to search for the access point with the given ID and use the password.
All of these steps involve a strong constraint to determine one and unique access point among the set of terminals (e.g. a terminal defined as a "server", while the other terminals are to be defined as "clients").

Each connection establishment requires from the user to declare through a terminal interface whether his terminal is the access point and, in that case, to define an ID and password (which have to be entered further by the other terminals users (clients)).

Those constraints limit the user experience. The problem becomes more acute when several terminals (more than two) are trying to be connected to one another.

The present invention aims to improve the situation.

To that end, the invention aims first at a method for connecting at least two terminals through a wireless local area network, the connection to said wireless local area network requiring the definition of an access point for providing access to said wireless network, wherein the method comprises the steps performed by at least one first terminal:
- determining a value of at least one parameter,
- transmitting said parameter value through an auxiliary wireless link,
- upon reception of a parameter value of at least one second terminal, comparing the parameter values of said first and second terminals, according to a predetermined criterion,
- on the basis of the comparison, selecting one terminal among at least said first and second terminals as an access point to said wireless local area network.

Therefore, the present invention proposes to use firstly an auxiliary wireless link which does not need the definition of an access point among the terminals to be connected, for exchanging between the terminals information (e.g. the aforesaid parameter value) which will be used for determining the access point of the wireless local area network.

Such an auxiliary wireless link aims to discover any second terminal around the first terminal (and also to allow the first terminal to be discoverable itself). This can be for example implemented using Bluetooth discovery mechanism (which does not need any access point to be determined), while the wireless local area network can be for example a Wi-Fi network.

Therefore, in a possible embodiment, the auxiliary wireless link can be implemented by using a Bluetooth connection (for example thanks to a Bluetooth bearer).
In a possible variant, the auxiliary wireless link can be implemented by using an NFC mechanism ("Near Field Communication"), or any wireless connection which does not need an access point such as ANT/ANT+ protocol, or Z-Wave protocol.

In a possible embodiment, the wireless local area network is a Wi-Fi network. In a possible variant, the wireless local area network is a Zigbee® network, or any wireless local area network which may need the definition of an access point.

According to an embodiment, the method comprises further the steps:
* if said first terminal is the selected terminal as the access point, establishing the wireless local area network and give access to other terminals,
* if said first terminal is not the selected terminal, connecting to said selected terminal as the access point to said wireless local area network.

Therefore, thanks to the aforesaid parameter values sent and received through the auxiliary wireless link, it is possible to rank for example the terminals according to their parameter values and to select the terminal which has for example the higher parameter value (or the lower parameter value, in a variant) to be the access point of the wireless local area network.

Then, each terminal is programmed so as to compute said ranking and to determine individually whether it should act as the access point of the WLAN (Wireless Local Area Network) because it has for example the higher parameter value, or whether it should ask for a connection to the WLAN to the terminal which has that higher parameter value.

The aforesaid parameter value is determined by each terminal and is proper to that terminal. It can be for example the battery level of that terminal, or the wireless connection strength, or any parameter value related to that terminal. It can be also, in a possible embodiment, simply a random value drawn by the terminal between predetermined lower and higher numbers (for example between 0 and 99). The word "predetermined" is meant here that those "predetermined lower and higher numbers" are the same between the terminals, or at least that there is a non-void intersection between the intervals defined by those lower and higher numbers for several terminals. In a further possible embodiment, the aforesaid parameter value can comprise also information about whether the terminal is intended to act as a server during the communication through the WLAN, and in that case, that terminal intends to become the access point. However, as several terminals can initially be programmed to act as servers (for example to send data to other terminals), it is still convenient to add further a randomly drawn value to the "sever (or client) information", so as to decide on which terminal is to elect as the access point among the server terminals.

Therefore, in a possible embodiment, each of said first and second terminals determines a respective value of said at least one parameter, said parameter being predetermined (for example a battery level, or alternatively a random value, etc.) and each value is related to a respective terminal.
This makes it possible to establish a ranking between the terminals.

In a possible embodiment:
- the parameter value is a random value drawn by a respective terminal, and
- upon reception of at least one parameter value, each terminal establishes a ranking of the at least one received parameter value and the randomly drawn parameter value, to select, on the basis of said ranking, a terminal as the access point.
That embodiment has been successfully tested with several kinds of terminals.

Since information can be exchanged through the auxiliary wireless link, it can be convenient to define also thanks to that auxiliary link the conditions to be connected to the WLAN, and for example to send to the other terminals a connection identifier (for example an "SSID" in the WLAN).

Therefore, in a corresponding possible embodiment, a message defining an identifier of connection to said wireless local area network is transmitted by each terminal through said auxiliary link.

Furthermore, it can be advantageous to send all at once in a same message: the connection identifier and the aforesaid parameter value. More particularly, the parameter value can be a part of the connection identifier.

Therefore, in a corresponding possible embodiment, the parameter value is transmitted through said auxiliary link within a message defining an identifier of connection to said wireless local area network.

Furthermore, the message can comprise also a secret value shared between users of said terminals.
That secret value can be for example a gesture agreed between users of the terminals and sensed by sensors in the terminals, or a code agreed between the users (for example "1234"), since the short range communication of a wireless link implies that the users can see each other, talk to each other in a same room of a building for example, and agree on a particular code or gesture.
That secret value can be, in a corresponding possible embodiment, a value of an identifier of a room shared between users of the terminals to send and/or receive data to/from terminals of said room. Furthermore, that secret value of the room identifier can result from an application of a cryptographic function. The cryptographic function can be a ciphering function or more simply a hash function (a "sha1" for example), so as to avoid the sending of the room ID, as is, to a terminal which can receive the message (e.g. covered by the wireless communication range) but which is not in the room actually and which is not untitled to join the WLAN.

In a variant or in a complement, the message can comprise also an identifier of a user of the terminal.
This makes it possible to prevent from sending the room ID, since each user of a terminal can accept or refuse to communicate with one terminal (of an unknown user for example).

In a possible embodiment, the message transmitted by a given terminal can further comprise information on whether said given terminal is intended to act as a server or as a client when connected to said wireless local area network. Therefore, in a possible corresponding embodiment, if only one terminal declares in its message that it intends to act as a server (for example its user intends to send data to the other terminals), then that terminal can be decided to be the access point. However, if more than one terminal intends to act as a server or if all the terminals are declared as clients (e.g. no server among them), then the access point can be chosen on a basis of a ranking of random values drawn by the server terminals or respectively by each terminal.
Therefore, the information on whether a terminal is intended to act as a server or as a client can be also a "parameter value" according to the general definition of the invention, given above, that information being sent through the aforesaid auxiliary wireless link.

Of course, a new room ID (if validated by other terminals) can be also a "parameter value" (for example as a trigger to change the access point). For example, if a new terminal broadcasts a new room ID in its message through the auxiliary link, and if several terminals recognize that room ID as valid, then these terminals can connect to that new terminal as the new access point.

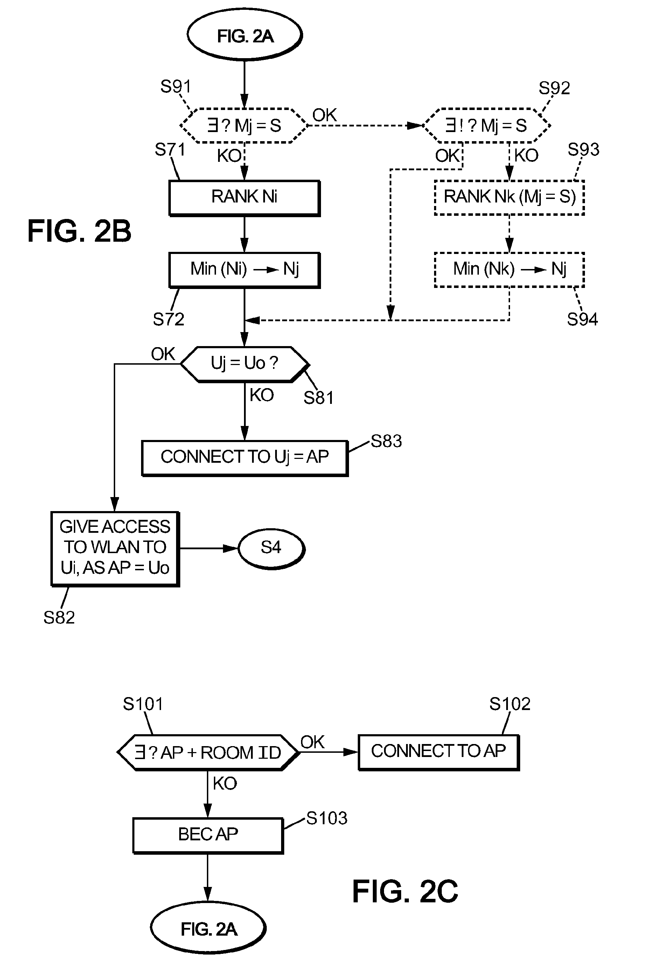

In an embodiment commented below with reference to figure 2C, the first terminal performs at least the general steps of transmitting said parameter value, comparing the parameter values, and selecting a terminal to be the access point based on the comparison,
if said first terminal is already an access point.

In fact, as the invention makes it possible to avoid any ambiguity relatively to the access point to designate between several terminals, it can be performed especially when a terminal is already an access point. Therefore, for example when a new terminal tries to be connected to the other terminals as an access point, the implementation of the method makes it possible to arbitrate between that new terminal and an already existing access point.

The invention aims also at a terminal to implement the invention, and more particularly comprising wireless communication means (typically an antenna and a communication interface for example according to Wi-Fi protocol and to Bluetooth protocol) and processing means (typically a memory unit and a processor) to perform the steps of the method according to the invention.

The invention aims also at a computer program (or a medium storing such a program), comprising instructions for the implementation of the method according to the invention, when the program is run by a processor.

The present invention is illustrated by way of example, and not by way of limitation, in the figures of the accompanying drawings, in which like reference numerals refer to similar elements and in which:
- Figure 1 shows schematically a set of communication terminals for performing the invention,
- Figures 2A and 2B show an example of a flow chart of a method according to an embodiment of the invention,
- Figure 2C shows an example of embodiment relatively to a connection of a new terminal to a WLAN already existing or to establish,
- Figure 3 shows a terminal according to the invention.

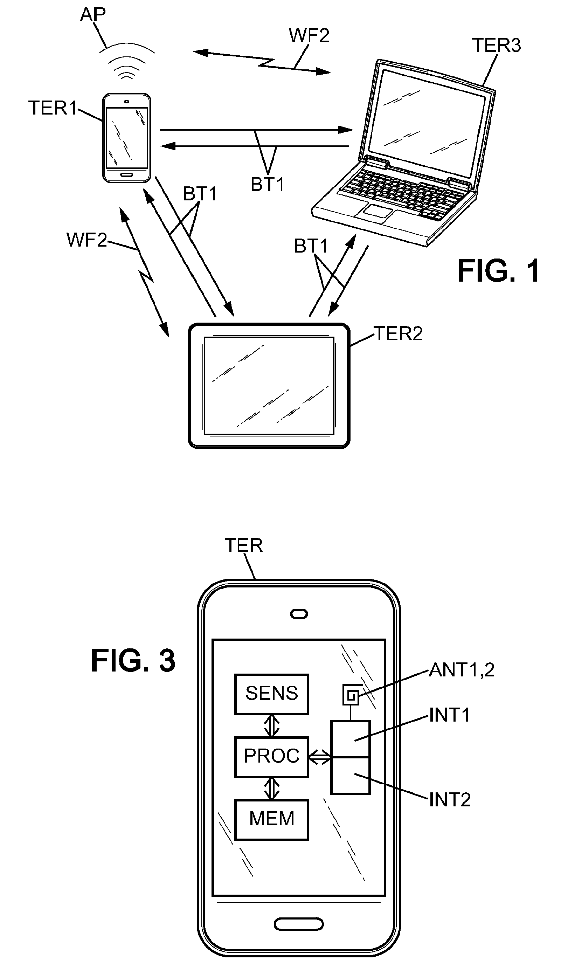

Referring to figure 1, several terminals (e.g. user equipment devices such as a smartphone TER1, a tablet TER2, a laptop TER3, or any computer having wireless communication means and processing means for communicating with other terminals) are adapted for a communication between them through:
- a main wireless link (such as Wi-Fi, or Zigbee®, etc.) according to a first communication protocol, and
- an auxiliary wireless link (such as Bluetooth, or ANT/ANT+ or a Near Field Communication (NFC), etc.) according to a second communication protocol.
More particularly, the first communication protocol needs an access point to be defined for establishing the communication between the terminals, whereas the second communication protocol does not need any access point to be defined.

Therefore, for connecting together the terminals TER1, TER2, TER3 through the main wireless link so as to establish a wireless local area network (WLAN), the present invention provides a first step which comprises information exchanges between the terminals. The information comprises a parameter value which makes it possible, for each terminal, to determine the access point AP in the WLAN. The information is comprised in messages sent/received by each terminal through the auxiliary wireless link (arrows referenced "BT1" in figure 1). Those messages are not specifically intended to particular terminals: each terminal emits its message in a zone around the terminal (called "room" hereafter) covered by the range of its auxiliary wireless link (e.g. in a broadcast mode), and each terminal in that room receives the messages of the terminals which are within the room.

Each terminal can thus use information provided by the other terminals to determine the access point AP of the WLAN among all the terminals. Each terminal determines individually the future access point. However, the way to determine the access point is the same between the terminals (a same software routine in the connection manager program), so that it leads to a same result and a same terminal designated as the WLAN access point.

Once the access point AP is determined (terminal TER1 in the example of figure 1), the WLAN can be established (arrows WF2 in figure 1).

Furthermore, it can be advantageous to communicate, for each terminal, all at once information to determine the WLAN access point and the WLAN connection identifier (SSID) in the same message BT1, so that the WLAN can be established without delay.

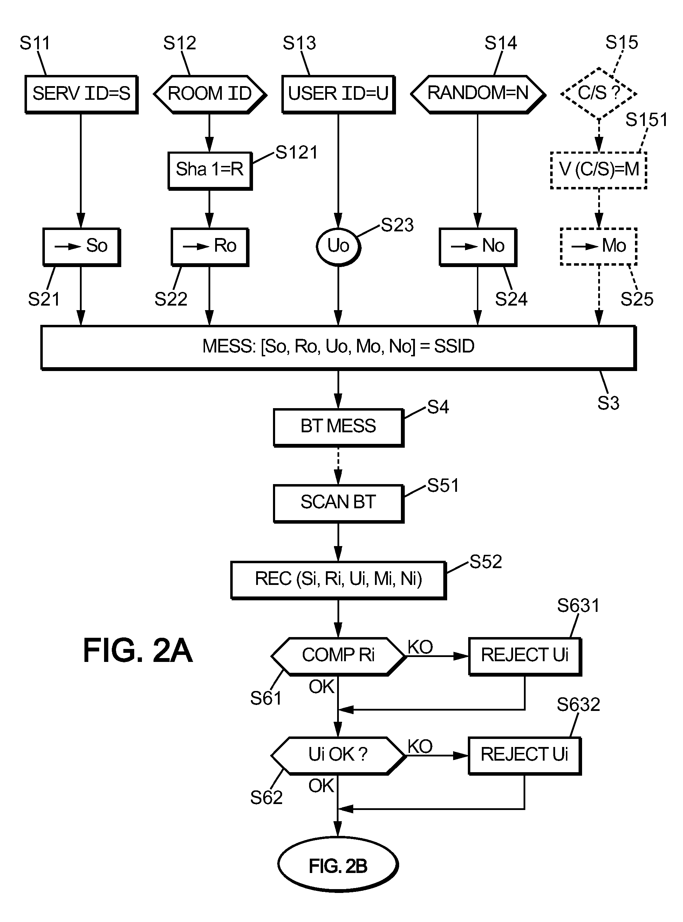

An example of embodiment to that end is now described with reference to figures 2A and 2B which are a flow chart of steps performed by one terminal to carry out the invention in an exemplary embodiment.

In the first steps S11 to S15, parameter values are defined so as to be put in respective fields of a message to build in step S3 and to broadcast through the auxiliary wireless link in step S4. More particularly, in step S11, a service identifier S is defined (for example a service for exchanging data, or for chat, etc.). It can contain (in a complement or in a variant) information about Wi-Fi hotspot properties such as security rules, and/or operating band or channel (e.g. 2,4 or 5 GHz frequency), etc., in order to improve and/or speed-up Wi-Fi connection establishment between the terminals. In step S12, a room identifier (for example a gesture or a code, agreed between the users of the terminals) is entered through a human/machine interface (a keyboard, a touchscreen or any other sensor to input a code or a gesture). In step S121, a cryptographic function is applied to the room ID (ID for identifier hereafter). Such a function can be for example an RSA cryptography or a ciphering or a hash function or a sha1, etc. and a part of that result (for example 8 first bits of sha1(room ID)) are taken and stored (as the value Ro), in step S22, in a memory of the terminal. In step S13, a user identifier (a nickname for example) is taken also to build the broadcast message. In step S14, a random value N is drawn (for example between 0 and 99), then stored in step 24 as "No". In step S15, which is optional (and then shown with dashed lines in figure 2A), it is determined whether the terminal intends to act as a server (S) or as a client (C) in the WLAN and a value (M) is assigned accordingly in step S151. For example, if the user of the terminal controls the terminal (through a human/machine interface) to send data, an application software running on the terminal can interpret that command as declaring the terminal as a server (and not as a client) in the WLAN.

In steps S21, S22, S23, S24 and S25, all of these values are stored in a memory of the terminal (e.g. the service ID: So ; the "cryptographic" room ID value: Ro ; the user's nickname: Uo ; the random value: No ; the client or server value: Mo).

In step S3, the message to broadcast is built and includes those stored values, for example an encapsulation of the type:
MESS = [**So**:1234- **Uo:**fzap- **Ro**:0F12BA- **No**:47- **Mo**:C]

In step S4, the message MESS is broadcast through a Bluetooth (BT) connection for example.

Then, the terminal can scan the messages received through the Bluetooth connection in step S51, from other terminals. Upon reception of a message from a terminal of a user Ui, the included values Si, Ri, Ui, optionally Mi, and Ni are read in step S52. In step S61, if the room ID cryptographic value Ri which is received in the message is different from the stored value Ro, then that message is rejected in step S631 (meaning that user Ui of the terminal sending the message is possibly an intruder). An alert mechanism can be implemented then on the terminal of user Ui to inform him that the room ID is wrong and can invite him to check the room ID to enter (for example if more than one terminal rejects its message). Furthermore (in a variant or in a complement), the nickname of the user Ui can be displayed on the screen of the terminal of user Uo so that user Uo can also check whether the terminal of user Ui is entitled to receive or exchange data with user Uo's terminal (in step S62). If not, the message received from Ui's terminal is rejected in step S632.

Figure 2B illustrates in fact two different embodiments, according to whether the option of step S15 (taking into account the client or server value M) is carried out or not.

In a first embodiment where step S15 is not carried out, a ranking among all the random values Ni extracted from all the received messages and the stored random value No is performed in step S71, and, for example, the lowest random value Nj which is found in step S72 determines the terminal of user Uj which is to be the access point of the WLAN. Therefore, if it is found in step S81 that the aforesaid lowest random value Nj is the one previously stored (No) in the memory of the terminal (e.g. Uj=Uo), then the terminal of user Uo shall give access to the WLAN to the other terminals (from which the messages where not rejected in steps S631, S632), as the access point AP to the WLAN network, in step S82. Otherwise, the user Uj's terminal is the access point and the user Uo's terminal connects to that access point (Uj) to join the WLAN in step S83. In the case where user Uo's terminal was previously the access point, that terminal (Uo) closes first the access to the WLAN.

In a second embodiment where step S15 is carried out, it is determined in step S91 if there is at least one terminal which is declared as a server (Mj=S). If not, then the process can be followed by steps S71 to S82-S83 described above. If there is just one unique terminal declared as a server in step S92, then this terminal can be the access point. If several terminals are declared as servers, then a ranking of the random values Nk can be performed restrictively among those server terminals in step S93. The access point can be chosen as the one having for example the lowest random value Nj in step S94.

In the second embodiment, it can be useless then to perform step S14 for all the terminals. In fact, the random drawing can be performed only if several server terminals are found in step S92 and the drawing can be performed only by those server terminals. Moreover, if several terminals draw a same random value Ni, another parameter can be taken so as to decide the access point between them (their battery level, or their MAC address on Bluetooth ("BSSID"), etc.).

Figure 2C shows an example of embodiment which can be implemented when, for example, a new terminal is trying to be connected to other terminals through the main wireless link (Wi-Fi typically). In step S101, the new terminal determines whether a WLAN access point, using the same room ID, is already present. If the answer is positive, in step S102, then the new terminal connects to the already existing access point. Otherwise, in step 103, the new terminal becomes access point and proceeds to steps S11-S15 of figure 2A (and the subsequent steps until S82 or S83) so as to build the message to broadcast through the auxiliary link and to scan any message received through the auxiliary link. Therefore, thanks to that provision, if another new terminal is simultaneously establishing a WLAN and tries then to be an access point at step S103, the implementation of the steps of figures 2A and 2B by the two new terminals makes it possible to determine (through the auxiliary link) which terminal will be the unique access point.

Therefore, it should be understood thus that the method of the invention makes it possible to solve any possible conflict between two terminals trying to be an access point.

In the same way, at the end of step S82 of figure 2B, the access point can periodically perform step S4 and the subsequent steps S51 to S81 so as to determine through the auxiliary link whether a new terminal is trying to be an access point (as a server for example) or is simply joining the already existing WLAN (as a client).

Of course, the method can be performed for establishing a WLAN, but can be performed also for keeping a session of sending/receiving data (for sharing, for example, multimedia data (image, video, sound, etc.) between users' terminals, and called "instant sharing session"), for example if a previous access point left the network (disconnected owing to a battery shutdown for example).

The invention provides thus many advantages, among which:
- an automatic connection can be provided without any knowledge about which terminal will send data,
- an automatic determination of the access point can be provided without any need of a connection historical,
- no user interaction is required (even if several server terminals are willing to open the network as access points in a same room ID, as explained here above relatively to the aforesaid second embodiment),
- no information exchange is required between the terminals through the auxiliary link (just a message broadcast),
- a black-out never occurs since it is easy to prevent from the case where several terminals open simultaneously an access point with a same SSID (it avoids a usual split of the terminals in two different groups and it avoids to let a server terminal alone and waiting for a connection),
- each terminal has a knowledge about other neighbor terminals before discovering the access point,
- of course, the auxiliary link (Bluetooth for example) can be used only when the Wi-Fi application is turned on or when a client is disconnected from an access point (which left the network for example), so as to reduce battery consumption.

Of course, the rule to select the access point is not limited to a random number drawing but can also be combined or not to other criteria such as battery level, a radio surrounding strength, etc.

The tests performed on eldest smartphones supporting Wi-Fi access point-mode and Bluetooth (version 2.0 or higher) were very successful. Tests were performed on several Android® devices (tablet, smartphone and dongle). The Bluetooth activation is instantaneous (lower than 1 second). The Bluetooth scan and detection takes between 2 and 15 seconds, and more precisely between 2 and 5 seconds (9 out of 10 times).

It is referred now to figure 3 to describe a terminal TER according to the invention. The terminal TER comprises:
- an antenna unit ANT1,2 for wireless communication, connected to
   ■ a first communication interface INT1 for example according to the Wi-Fi protocol (needing an access point), and
   ■ a second communication interface INT2 for example according to the Bluetooth protocol (without any need of an access point),
- a processor PROC and a memory unit MEM for running the computer program according to the invention (and also for storing any data, when needed),
- one or several sensors (and/or a keyboard or a touchscreen) for detecting for example a gesture (or an entered code) defining a room ID.

More generally, the present invention can also be embedded in a computer program product, which comprises all the features enabling the implementation of the methods described herein, and which, when loaded in an information processing system (for example in a user terminal TER), causes the information processing system. Computer program means or computer program in the present context mean any expression, in any language, code or notation, of a set of instructions intended to cause a system having an information processing capability to perform a particular function either directly or after the conversion to another language. Such a computer program can be stored on a computer or machine readable medium allowing data, instructions, messages or message packets, and other machine readable information to be read from the medium. The computer or machine readable medium may include a non-transitory readable medium such as a non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

## Claims

1. A method for connecting at least two terminals through a wireless local area network, the connection to said wireless local area network requiring the definition of an access point for providing access to said wireless local area network, wherein the method comprises the steps performed by at least one first terminal:
- determining a value of at least one parameter,
- transmitting said parameter value through an auxiliary wireless link,
- upon reception of a parameter value of at least one second terminal, comparing the parameter values of said first and second terminals, according to a predetermined criterion,
- on the basis of the comparison, selecting one terminal among at least said first and second terminals as an access point to said wireless local area network.

2. The method of claim 1, comprising further the steps:
* if said first terminal is the selected terminal as the access point, establishing the wireless local area network and give access to other terminals,
* if said first terminal is not the selected terminal, connecting to said selected terminal as the access point to said wireless local area network.

3. The method according to anyone of the preceding claims, wherein the auxiliary wireless link is implemented by using a Bluetooth mechanism.

4. The method according to anyone of the preceding claims, wherein the wireless local area network is a Wi-Fi network.

5. The method according to anyone of the preceding claims, wherein each of said first and second terminals determines a respective value of said at least one parameter, said parameter being predetermined and the value being related to a respective terminal.

6. The method according to anyone of the preceding claims, wherein:
- the parameter value is a random value drawn by a respective terminal, and
- upon reception of at least one parameter value, each terminal establishes a ranking of the at least one received parameter value and the randomly drawn parameter value, to select, on the basis of said ranking, a terminal as the access point.

7. The method according to anyone of the preceding claims, wherein a message defining an identifier of connection to said wireless local area network is transmitted by each terminal through said auxiliary link.

8. The method according to anyone of the preceding claims, wherein said parameter value is transmitted through said auxiliary link within a message defining an identifier of connection to said wireless local area network.

9. The method according to anyone of claims 7 and 8, wherein said message comprises a secret value shared between users of said terminals.

10. The method according to claim 9, wherein said secret value is a value of an identifier of a room shared between users of said terminals to send and/or receive data to/from terminals of said room, said secret value of the room identifier resulting from an application of a cryptographic function.

11. The method according to anyone of claims 7 to 10, wherein the message comprises an identifier of a user of the terminal.

12. The method according to anyone of claims 7 to 11, wherein the message transmitted by a given terminal comprises information on whether said given terminal is intended to act as a server or as a client when connected to said wireless local area network.

13. The method according to anyone of the preceding claims, wherein said first terminal performs at least said steps of transmitting said parameter value, comparing the parameter values, and selecting a terminal to be the access point based on the comparison,
if said first terminal is already an access point.

14. A terminal comprising wireless communication means and processing means to perform the steps of the method according to any of the preceding claims.

15. Computer program, comprising instructions for the implementation of the method according to claims 1 to 13, when the program is run by a processor.
